# EUROPEAN PATENT APPLICATION

(11) **EP 4 632 998 A1**
(43) Date of publication of application: **15.10.2025**
(21) Application number: 25169517.7
(22) Date of filing: 09.04.2025
(51) Int. Cl.: H02J 7/00, B60L 53/35

(54) **METHOD AND APPARATUS FOR CHARGING CONTROL OF AIR MOBILITY DEVICE**

(30) Priority: 11.04.2024 KR 20240048553
(71) Applicant: Hyundai Motor Company, Seoul 06797 (KR); Kia Corporation, Seoul 06797 (KR)
(72) Inventor: KIM, Hyun Jin, 18280 Hwaseong-si, Gyeonggi-do (KR); CHANG, Byung Wook, 18280 Hwaseong-si, Gyeonggi-do (KR)
(74) Representative: Viering, Jentschura & Partner mbB Patent- und Rechtsanwälte

(57) **Abstract**

Disclosed herein method and apparatus for charging control of air mobility device. The method includes: controlling, by one or more processors, an air mobility device and a charger to make a coupling, between a connector of the charger and a port of the air mobility device, for power transfer from the charger to the air mobility device; determining, based on a coupling parameter of the coupling between the connector and the port not satisfying a threshold condition, whether the air mobility device is stationary within a designated zone; and controlling, based on the air mobility device stopping outside the designated zone, the air mobility device and the charger to release the coupling between the port and the connector.

## Description

### CROSS REFERENCE TO RELATED APPLICATION

The present application claims priority to Korean Patent Application No. 10-2024-0048553, filed April 11, 2024, the entire content of which is incorporated herein for all purposes by reference.

### BACKGROUND

### Field

This disclosure relates to a method and apparatus for power charging control of an air mobility device, and more particularly to an air mobility device charging control method and apparatus for safe and stable power transfer.

### Description

As technology advances, various new transportation mobility devices are being introduced. To address ground traffic congestion and deteriorating urban environments, advanced aerial mobility (AAM) devices are gaining attention as an alternative to some ground transportation options. AAM devices can move to specific points within complex urban environments and provide services linked to other types of mobility devices, such as ground mobility devices.

AAM devices primarily use electric propulsion systems and are equipped with batteries that power the propulsion system. For the operation of AAM devices, the batteries need to be charged, and AAM devices can be charged by connecting to a charger that supplies power to the batteries. AAM devices have a port, at a specific location on the body (e.g., fuselage), that connects to the charger, and the charger can be equipped with a connector that attaches to the port. Chargers may be manually moved to the AAM device by an operator (e.g., a human operator), who can then connect the connector to the port. Unlike some other types of aircraft, AAM devices can take off and land in designated urban areas in large numbers and may require minimal preparation time for takeoff and landing, necessitating quick charging. Furthermore, the designated zones for AAM device takeoff and landing may use narrower spaces compared to what some airport facilities can offer, making it potentially inefficient and dangerous for many operators to perform charging tasks in these areas.

The matters described in this Background section are only for enhancement of understanding of the background of the disclosure, and should not be taken as acknowledgement that they correspond to prior art already known to those skilled in the art.

### SUMMARY

The disclosure aims to provide a method and apparatus for charging control of an air mobility device that is capable of ensuring safe and stable power transfer and convenient connection.

The technical objects of the disclosure are not limited to the aforesaid, and other objects not described herein with be clearly understood by those skilled in the art from the descriptions below.

According to one or more example embodiments of the present disclosure, a method may include: controlling, by one or more processors, an air mobility device and a charger to make a coupling, between a connector of the charger and a port of the air mobility device, for power transfer from the charger to the air mobility device; determining, based on a coupling parameter of the coupling between the connector and the port not satisfying a threshold condition, whether the air mobility device is stationary within a designated zone; and controlling, based on the air mobility device stopping outside the designated zone, the air mobility device and the charger to release the coupling between the port and the connector.

The coupling parameter may include at least one of: an actuation force between the port and the connector, a coupling gap between the port and the connector, or an electrical transmission status, during the power transfer, of at least one of the port or the connector.

The method may further include controlling, based on the air mobility device moving and stopping within the designated zone during the power transfer, the charger to approach the air mobility device to maintain the coupling such that the coupling parameter satisfies the threshold condition.
The method may further include determining whether a caution situation occurs based on mobility status information of the air mobility device; determining whether the caution situation satisfies a transfer interruption condition on the basis of the occurrence of the caution situation; controlling the air mobility device and the charger to release the coupling on the basis of the caution situation satisfying the transfer interruption condition; and maintaining the coupling and notifying a message generated based on the maintained coupling and the caution situation on the basis of the caution situation dissatisfying the transfer interruption condition.

The mobility status information may include: operational status information related to an operation of at least one component of the air mobility device, and flight information related to the first flight operation of the air mobility device. The operational status information may be used for power transfer control. The operational status information may include a charging status and a component status. The charging status may include at least one of: a remaining charge amount of the air mobility device, a temperature of a battery of the air mobility device, or an electrical state of the battery. The component status may include status data of the at least one component of the air mobility device. The status data may be obtained via a sensor of the air mobility device. The flight information may include at least one of: schedule information, passenger information, or cargo information.

Controlling the air mobility device and the charger to make the coupling may include: generating, based on position information and bearing information of each of the port and the connector, relative location information indicating relative locations of the port and the connector; and controlling the air mobility device and the charger to make the coupling by controlling, based on the relative location information, a movement of the charger.

The method may further include: determining the position information and the bearing information of the port by recognizing, via a sensor of an apparatus controlling the charger, a port indicator provided on the air mobility device; and determining the position information and the bearing information of the connector by recognizing, via the sensor, a connector indicator provided on the charger.

The port indicator and the connector indicator may include at least one of a marking code, a location indicator, or an acoustic positioning beacon. The sensor may include at least one of: an imaging sensor, a location communication sensor, or an acoustic sensor.

Generating the relative location information may include: determining whether the air mobility device is stationary within the designated zone; and generating the relative location information based on the air mobility device being stationary within the designated zone.

Generating the relative location information may include: determining, based on charging support information of the charger and charging specification information of the air mobility device, whether the charger supports power transfer with the air mobility device; and generating the relative location information based on the charger supporting the power transfer.

According to one or more example embodiments of the present disclosure, an apparatus may include: a sensor configured to sense a surrounding environment of at least one of an air mobility device or a charger; memory configured to store at least one instruction; and at least one processor. The at least one processor may be configured to execute the at least one instruction stored in the memory to: control the air mobility device and the charger to make a coupling, between a connector of the charger and a port of the air mobility device, for power transfer from the charger to the air mobility device; determine, based on a coupling parameter of the coupling between the connector and the port not satisfying a threshold condition, whether the air mobility device is stationary within a designated zone; and control, based on the air mobility device stopping outside the designated zone, the air mobility device and the charger to release the coupling between the port and the connector.

The coupling parameter may include at least one of: an actuation force between the port and the connector, a coupling gap between the port and the connector, or an electrical transmission status, during the power transfer, of at least one of the port or the connector.

The at least one processor may be further configured to execute the at least one instruction stored in the memory to control, based on the air mobility device moving and coming to a stop within the designated zone during the power transfer, the charger to approach the air mobility device to maintain the coupling such that the coupling parameter satisfies the threshold condition.

The at least one processor may be further configured to determine whether a caution situation occurs based on mobility status information of the air mobility device during power transfer, determine whether the caution situation satisfies a transfer interruption condition on the basis of the occurrence of the caution situation, control the air mobility device and the charger to release the coupling on the basis of the caution situation satisfying the transfer interruption condition, and maintain the coupling and notifying a message generated based on the maintained coupling and the caution situation on the basis of the caution situation dissatisfying the transfer interruption condition.

The mobility status information may include: operational status information related to an operation of at least one component of the air mobility device, and flight information related to the first flight operation of the air mobility device. The operational status information may be used for power transfer control. The operational status information may include a charging status and a component status. The charging status may include at least one of: a remaining charge amount of the air mobility device, a temperature of a battery of the air mobility device, or an electrical state of the battery. The component status may include status data of the at least one component of the air mobility device. The status data may be obtained via the sensor. The flight information may include at least one of: schedule information, passenger information, or cargo information.

The at least one processor may be configured to execute the at least one instruction stored in the memory to control the air mobility device and the charger to make the coupling by: generating, based on position information and bearing information of each of the port and the connector, relative location information indicating relative locations of the port and the connector; and controlling the air mobility device and the charger to make the coupling by controlling, based on the relative location information, the charger.

The at least one processor may be further configured to execute the at least one instruction stored in the memory to: determine the position information and the bearing information of the port by recognizing, via the sensor, a port indicator provided on the air mobility device; and determine the position information and the bearing information of the connector by recognizing, via the sensor, a connector indicator provided on the charger.

The port indicator and the connector indicator may include at least one of a marking code, a location indicator, or an acoustic positioning beacon. The sensor may include at least one of: an imaging sensor, a location communication sensor, or an acoustic sensor.

The at least one processor may be configured to execute the at least one instruction stored in the memory to generate the relative location information by: determining whether the air mobility device is stationary within the designated zone; and generating the relative location information based on the air mobility device being stationary within the designated zone.

The at least one processor may be configured to execute the at least one instruction stored in the memory to generate the relative location information by: determining, based on charging support information of the charger and charging specification information of the air mobility device, whether the charger supports power transfer with the air mobility device; and generating the relative location information based on the charger supporting the power transfer.

The disclosure is advantageous in terms of providing a method and apparatus for charging control of an air mobility device that is capable of ensuring safe and stable power transfer and convenient connection.

The advantages of the disclosure are not limited to the aforesaid, and other advantages not described herein may be clearly understood by those skilled in the art from the descriptions below.

### BRIEF DESCRIPTION OF THE DRAWINGS

FIG. 1 is a diagram schematically illustrating a module commonly configured for various types of mobility apparatus.
FIG. 2 is a diagram illustrating an air mobility apparatus according to an example of the present disclosure.
FIG. 3 is a diagram illustrating a charging system according to an embodiment of the disclosure;
FIG. 4 is a diagram illustrating an air mobility device according to the disclosure;
FIG. 5 is a diagram illustrating modules constituting an air mobility device according to the disclosure;
FIG. 6 is a diagram illustrating modules constituting a charger according to the disclosure;
FIG. 7 is a diagram illustrating a port and connector according to the disclosure;
FIG. 8 is a diagram illustrating modules constituting a charging control apparatus according to an embodiment of the disclosure;
FIG. 9 is a flowchart illustrating a method for charging control of an air mobility device according to another embodiment of the disclosure; and
FIG. 10 is a flowchart illustrating a method for charging control of an air mobility device according to still another embodiment of the disclosure.

### DETAILED DESCRIPTION

Hereinafter, one or more example embodiments of the present disclosure will be described in detail with reference to the accompanying drawings so that those skilled in the art may easily implement the present disclosure. However, the present disclosure may be implemented in various different ways, and is not limited to the one or more example embodiments described therein.

In describing one or more example embodiments of the present disclosure, well-known functions or constructions will not be described in detail since they may unnecessarily obscure the understanding of the present disclosure. The same constituent elements in the drawings are denoted by the same reference numerals, and a repeated description of the same elements will be omitted.

In the present disclosure, when an element is simply referred to as being "connected to", "coupled to" or "linked to" another element, this may mean that an element is "directly connected to", "directly coupled to" or "directly linked to" another element or is connected to, coupled to or linked to another element with the other element intervening therebetween. In addition, when an element "includes" or "has" another element, this means that one element may further include another element without excluding another component unless specifically stated otherwise.

In the present disclosure, the terms first, second, etc. are only used to distinguish one element from another and do not limit the order or the degree of importance between the elements unless specifically mentioned. Accordingly, a first element in an example embodiment could be termed a second element in another example embodiment, and, similarly, a second element in an example embodiment could be termed a first element in another example embodiment, without departing from the scope of the present disclosure.

In the present disclosure, elements that are distinguished from each other are for clearly describing each feature, and do not necessarily mean that the elements are separated. That is, a plurality of elements may be integrated in one hardware or software component, or one element may be distributed and formed in a plurality of hardware or software components. Therefore, even if not mentioned otherwise, such integrated or distributed embodiments are included in the scope of the present disclosure.

In the present disclosure, elements described in various example embodiments do not necessarily mean essential elements, and some of them may be optional elements. Therefore, an example embodiment composed of a subset of elements described in an example embodiment is also included in the scope of the present disclosure. In addition, example embodiments including other elements in addition to the elements described in the various example embodiments are also included in the scope of the present disclosure.

The advantages and features of the present disclosure and the way of attaining them will become apparent with reference to one or more example embodiments described below in detail in conjunction with the accompanying drawings. Example embodiments, however, may be embodied in many different forms and should not be constructed as being limited to example embodiments set forth herein. Rather, these example embodiments are provided so that this disclosure will be complete and will fully convey the scope of the disclosure to those skilled in the art.

In the present disclosure, each of phrases such as "A or B", "at least one of A and B", "at least one of A or B", "A, B or C", "at least one of A, B and C", ""at Each of the phrases such as "at least one of A, B or C" and "at least one of A, B, C or combination thereof" may include any one or all possible combinations of the items listed together in the corresponding one of the phrases.

For purposes of this application and the claims, using the exemplary phrase "at least one of: A; B; or C" or "at least one of A, B, or C," the phrase means "at least one A, or at least one B, or at least one C, or any combination of at least one A, at least one B, and at least one C. Further, exemplary phrases, such as "A, B, and C", "A, B, or C", "at least one of A, B, and C", "at least one of A, B, or C", etc. as used herein may mean each listed item or all possible combinations of the listed items. For example, "at least one of A or B" may refer to (1) at least one A; (2) at least one B; or (3) at least one A and at least one B.

Throughout the present disclosure, references to components, units, or modules generally refer to items that logically can be grouped together to perform a function or group of related functions. Like reference numerals are generally intended to refer to the same or similar components. Components, units, and modules may be implemented in software, hardware or a combination of software and hardware. The components, units, modules, and/or functions described above may be implemented and/or performed by one or more processors. For examples, the components, units, and/or modules may include processor(s), microprocessor(s), graphics processing unit(s), logic circuit(s), dedicated circuit(s), application-specific integrated circuit(s), programmable array logic, field-programmable gate array(s), controller(s), microcontroller(s), and/or other suitable hardware. The components, units, and/or modules may also include software control module(s) implemented with a processor or logic circuitry for example. The components, units, and/or modules may include or otherwise be able to access memory such as, for example, one or more non-transitory computer-readable storage media, such as random-access memory, read-only memory, electrically erasable programmable read-only memory, erasable programmable read-only memory, flash/other memory device(s), data registrar(s), database(s), and/or other suitable hardware. One or more storage type media may include any or all of the tangible memory of computers, processors, or the like, or associated modules thereof, such as various semiconductor memories, tape drives, disk drives and the like, which may provide non-transitory storage at any time for software programming.

In the present disclosure, expressions of location relations used in the present specification such as "upper", "lower", "left" and "right" are employed for the convenience of explanation, and in case drawings illustrated in the present specification are inversed, the location relations described in the specification may be inversely understood.

Chargers may be conceptualized in the form of autonomously moving robots.

If the charger has autonomous mobility and can perform charging tasks automatically without human interventions, various technical challenges may arise. For example, it may be beneficial for the charger's connector to be able to easily approach and accurately couple with the AAM device's port. Additionally, while the connector and the port are coupled and charging is in progress, the AAM device might move due to unintended rolling of the landing wheels in contact with the ground. This could result in damage to the coupled port and connector or, in some cases, secondary accidents involving the AAM device, charger, or the surrounding areas. To prevent damage and accidents caused by unexpected movements of the AAM device during charging, the reliability and safety of power transfer need to be ensured.

Hereinafter, one or more example embodiments of the present disclosure will be described with reference to the accompanying drawings.

Before discussing a charging system according to the one or more example embodiments of the present disclosure, various types of mobility apparatuses to which the charging system can be applied will be described. Although the charging system is primarily described as being applied to air mobility apparatus, it may also be used for mobility apparatus that move on land, sea, or underwater, as long as it is not technically inconsistent. Hereinafter, a schematic configuration of various types of mobility apparatuses will be described.

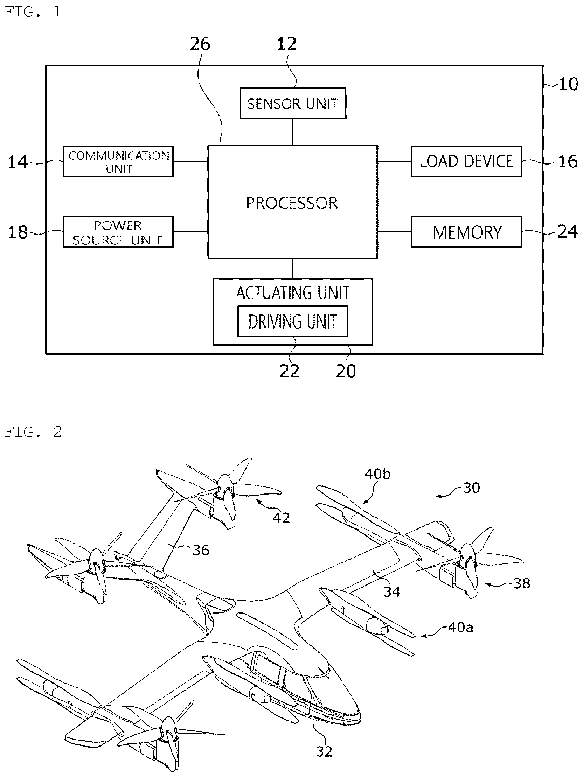

FIG. 1 is a schematic diagram showing a module commonly configured in various types of mobile mobility devices.

The mobility apparatus 10 may be a moving object with mobility in the present disclosure. Mobility may involve moving from one point to a specific point while loading people, objects, and/or cargo for specific purposes. The mobility apparatus 10 may move for transportation and other purposes. Other purposes may include, for example, detecting or monitoring the environment around the mobility apparatus 10 by mounting an observation device. More specifically, the mobility apparatus 10 may be equipped with a camera to capture or analyze the surrounding environment and transmit the captured or analyzed image to a designated device. The mobility apparatus 10 may be used for various purposes beyond the aforementioned examples.

The mobility apparatus 10 may be capable of traversing over and/or across different terrains and spaces such as land, underground, air, space, sea, and/or underwater. Land or underground mobility devices 10 may be provided, for example, in the form of vehicles or robots. Air or space mobility devices 10 may be provided, for example, in the form of air mobility apparatuses, such as fixed-wing or rotary-wing aircraft, advanced air mobility (AAM) devices, unmanned aerial vehicles, drones, rockets, or vehicles mounted on satellites. Marine or underwater mobility devices 10 may include, for example, ships or submarines. The mobility apparatus 10 may move across multiple terrains or spaces with even greater degrees of freedom of movement than traditional amphibious vehicles and aircraft.

Furthermore, the mobility apparatus 10 may be moved manually, autonomously, or by a combination of these methods. Manual operation may be implemented by an operator or pilot using an interface, such as a control device provided in the mobility apparatus 10 or by remote control from a control center or an external control station. Autonomous control, that is, autonomous movement, may be performed by the independent processing of the mobility apparatus 10 or a combination of remote control through the control center and the cooperation between the mobility apparatus 10 and the control center.

Meanwhile, the mobility apparatus 10, which operates in various forms, may be designed differently depending on the use, movement space, driving method, control method, and other factors. However, from a comprehensive perspective of mobility, it may have common functional modules, as illustrated in FIG. 1. FIG. 1 describes the common functions in various types of mobility devices 10. Accordingly, unique functional modules utilized in each type are omitted, but the present disclosure does not exclude the modules omitted in FIG. 1, nor are they excluded from the scope of the present disclosure.

The mobility apparatus 10 may include a sensor unit (also referred to as a sensor) 12, a communication unit (also referred to as a communication interface) 14, and a load device 16.

The sensor unit 12 may be equipped with various types of detectors that detect the various states and situations occurring in the external and internal environments of the mobility apparatus 10. The sensor unit 12 includes a positioning sensor to identify the location information of the mobility apparatus 10. That is, the sensor unit 12 may include various heterogeneous sensors and acquire sensing data detected from each sensor. The sensor unit 12 may acquire sensor data used for movement control, status data detecting the state of modules constituting the mobility apparatus 10, situation data detecting the situation of passengers and/or cargo. The sensor unit 12 may provide the data to a processor 26 that triggers specific functions and actions. In the present disclosure, movement control may include at least one of the following: linear movement, turning, acceleration, deceleration, attitude control of the mobility apparatus 10, braking, and hovering. In the present disclosure, hovering may be control that generates thrust toward the downward or vertical direction relative to the mobility apparatus 10 to cause specific movements or movements of the mobility apparatus 10. The specific action or movement may include, for example, takeoff, landing, or substantial stationary flight within a limited range. The data from the sensor unit 12 described above is merely exemplary and may further include sensor data that detects various situations not enumerated here.

The communication unit 14 may support mutual communication with other devices to exchange data with external devices. Other devices may include, for example, a server controlling the mobility apparatus 10 or exchanging data related to the movement control of the mobility apparatus 10, ancillary devices supporting movement, and other mobility apparatuses. The server may be referred to by various terms, such as control device, management device, and control station. The communication unit 14 may transmit data generated or stored during movement to other devices and receive data and software modules transmitted from other devices. The protocol applied to the communication unit 14 may be determined according to the type of mobility apparatus 10, and the communication unit 14 may communicate with other vehicles or other devices based on cellular communication, WAVE (Wireless Access in Vehicular Environment) communication, DSRC (Dedicated Short Range Communication), near-field communication or on other communication methods. The aforementioned communication protocols and methods are merely exemplary and are not limited to these.

The load device 16 is installed on the mobility apparatus 10 and may be an auxiliary device that consumes power supplied from the power source unit 18 or converted from the output of the power source unit 18 by a command required for use by the user or management of the load. The load device 16 in the present disclosure may be a type of non-mobility electrical device, excluding the mobility power system used in the driving unit 22. The load device 114 may include, for example, a display system, an air conditioning system, a lighting system, a seat system, and various devices installed in the mobility apparatus 10.

Although not shown in FIG. 1, the mobility apparatus 10 may include an interface that receives requests for operations of the movement control and the load device 16. The interface may be implemented as a hardware device or a software interface. The hardware interface may be a hardware control device for movement operations required by the user for the mobility apparatus 10, such as a control stick for aviation, a steering wheel for land vehicles, pedals for land vehicles, buttons, a rudder for marine vessels, etc., but is not limited to these. The software interface may be, for example, a touch-sensitive display, but is not limited to this.

The mobility apparatus 10 may also include a power source unit (also referred to as a power source) 18, an actuating unit (also referred to as an actuator) 20, and a driving unit (also referred to a driver or a propulsion) 22.

The power source unit 18 may generate and supply power and electricity used for the mobility power system, such as the driving unit 22, and for the load device 16. The mobility apparatus 10 may generate energy using at least one of various energy sources. When the mobility apparatus 10 is driven based on electric energy, the power source unit 18 may be composed of, for example, an electric battery or a combination of an electric battery and a charging module that charges the battery. When the power source unit 18 consists solely of an electric battery, the electric battery may be charged at a charging station or by another mobility device to supply power. When the power source unit 18 is a combination of an electric battery and a charging module, the charging module may employ at least one of a fuel cell and an engine based on fossil energy. The fuel cell may use substances such as hydrogen gas to produce electricity. In the case of an engine, the power source unit 18 may include a generator coupled with the engine, and the generator may convert mechanical energy generated by the engine into electrical energy to charge the electric battery.

If the mobility apparatus 10 is driven based on fossil energy or nuclear fuel, the power source unit 18 may be configured with an internal combustion engine, turbine engine, or nuclear fuel-based engine. The mobility apparatus 10 may also have a hybrid-type power source unit 18 composed of an engine based on fossil energy and an electric battery. The hybrid-type power source unit 18 may charge the electric battery using the output of the engine generated during movement, and depending on the state of the mobility apparatus 10, the characteristics of the movement path, or the movement situation, it may select either the power from the engine or the electric battery to generate the driving force of the driving unit 22. In another example, the hybrid-type power source unit 18 may include an electric battery that can be charged by an external source and an engine. The processor 26 may switch between the engine power and the electric battery power depending on various situations and states to apply energy to the driving unit 22, thereby generating driving force.

The actuating unit 20 may include at least one module that implements movement operations. If the mobility apparatus 10 is an air mobility apparatus, the actuating unit 20 may include mechanical and software components that perform at least one of the following operations: flight attitude control, hovering control related to takeoff and landing, altitude change control, and turning operation control. The flight attitude may relate to the roll, yaw, and pitch of the air mobility apparatus. If the mobility apparatus 10 is a ground mobility device, the actuating unit 20 may include mechanical and software components that realize at least one of the following driving operations: longitudinal control such as acceleration and deceleration, lateral control such as steering. In the present disclosure, the actuating unit 20 may also be referred to as an actuator.

The actuating unit 20 may include the driving unit 22. The driving unit 22 is a module that implements external operations such as linear movement, turning, acceleration, deceleration, attitude control of the mobility apparatus 10, braking, and hovering. The driving unit 22 may be implemented in various forms depending on the type of mobility apparatus 10. For some implementations of the mobility apparatus 10, the driving unit of the fixed-wing air mobility apparatus may be a turbine engine, flap installed on the main wing or tail wing and related to operations such as thrust and lift.

In another example, the fixed-wing air mobility apparatus may additionally include a propulsion assembly such as a propeller installed on a specific part of the main wing. The driving unit of a rotary-wing air mobility apparatus may include a rotor-type propulsion assembly and flaps. installed on the upper part of the fuselage and the tail wing. Some implementations of an air mobility apparatus may also include landing gear such as wheels necessary for takeoff and landing, which may be housed within the fuselage during flight.

The driving unit 22 of an AAM-type air mobility apparatus may be equipped with a rotor-type propulsion assembly similarly to a rotary-wing air mobility. The propulsion assembly applied to the AAM-type air mobility apparatus may may be fixed at least non-tiltable to the main wing, or may be installed to the main wing with a tilting capability. In another example, the propulsion assembly applied to the AAM-type air mobility apparatus may be installed multiple times inside the main wing. Additionally, the driving unit of the AAM-type air mobility apparatus may be configured to rotate the wing to which the propulsion assembly is coupled within a certain angle range. Depending on the specifications, the driving unit of the AAM-type air mobility apparatus may be provided with wheels, such as landing gear, that are accommodated within the fuselage during flight and extended during takeoff and landing.

If the AAM-type air mobility apparatus is driven based on electric energy, the driving unit 22 may include a motor and inverter that primarily rotate the propeller with electricity. If the AAM-type air mobility apparatus is driven based on non-electric energy, such as fossil energy, the driving unit 22 may primarily consist of modules that transmit the rotational power generated by the internal combustion engine to the propeller.

If the mobility apparatus 10 is a ground mobility device, the driving unit 22 may include a plurality of wheels, a driving force transmission module for generating driving force and applying or transmitting driving force to the wheels, a braking module for decelerating the driving of the wheels, and a steering module for realizing lateral control of the wheels. The wheel, the driving force transmission modules, the braking modules, etc., may form a driving assembly, and driving assemblies may be provided depending on the number of wheels. If the ground mobility device is driven based on electric energy, the driving force transmission module may be composed of a motor module that generates driving force based on the electric power output from the electric battery. If the ground mobility device is driven based on fossil energy, the driving force transmission module may include transmission and gear module that transmits power from the internal combustion engine.

If the mobility apparatus 10 is a sea or underwater mobility device, the driving unit 22 may include a rudder, propulsion propeller, and modules that transmit power and specific motions to these components.

The mobility apparatus 10 may also include memory 24 and a processor 26.

The memory 24 stores applications and various data for controlling the mobility apparatus 10 and may load applications or read/write data in response to a request from the processor 26. Applications and data vary depending on the type and detailed specifications of the mobility apparatus 10 and may include sensor data related to movement control, state data related to the mobility device's movement control, data received from other devices, and data related to energy control between the power source unit 18 and the driving unit 22. Additionally, applications and data may include data related to modules responsible for functions other than control, software related to the operation of the mobility computing system, information and applications for autonomous movement, path information, and various information and control programs for user convenience.

In relation to the present disclosure, the processor 26 may use the applications, instructions, and data stored in the memory 24 to handle movement control, path control, energy control, control of the load device 16, autonomous movement control, and convenience functions. The processor 26 may also have different control processes depending on the type and detailed specifications of the mobility apparatus 10. The processor 26 may be implemented as a single processing module. Alternatively, the processing according to the above-mentioned matters may be distributed across multiple processing modules, and the processor 26 may collectively refer to multiple processing modules in the present disclosure.

FIG. 2 is a diagram illustrating an air mobility apparatus according to one example of the present disclosure.

The air mobility apparatus 30 of one example may include a streamlined fuselage 32, a main wing 34 arranged on the left and right sides of the central region of the fuselage 32, and a tail wing 36 arranged at the end region of the fuselage 32. The fuselage 32 may include, for example, a cabin for the pilot and passengers and space for loading cargo. The main wing 34 and the tail wing 36 may be configured as fixed wings.

The main wing 34 may have an inboard region and an outboard region. The main wing tilting propulsion assembly 38 with a tilting rotor may be arranged in the front region of the left and right outboard areas. The main wing non-tilting propulsion assemblies 40a and 40b , arranged horizontally relative to the fuselage 32, may be located in the inboard region and the rear region of the outboard areas, and may be referred to as lift propulsion assemblies. Additionally, the tail wing tilting propulsion assembly 42 with a tilting rotor may be arranged at the end of the tail wing.

Each of the propulsion assemblies described above may include a propeller with multiple blades, a hub to which the ends of each blade are connected, a motor that supplies rotational force to the shaft, an inverter that adjusts the power of the power source unit 18 based on flight conditions and motor specifications, and a propulsion assembly cooling module that cools the motor and inverter.

The main wing tilting propulsion assembly 38 and the tail wing tilting propulsion assembly 42 may include a nacelle that accommodates and covers the aforementioned components. The main wing tilting propulsion assembly 38 and the tail wing tilting propulsion assembly 42 may be fixed and may be tilted with respect to the boom by hinge coupling between nacelle and boom protruded from the outboard area of the main wing and the end of the tail wing. In the present disclosure, the propulsion assembly may also be referred to as a rotor propulsion assembly. When the flight mode is a hovering mode, such as during takeoff and landing, the main wing and tail wing tilting propulsion assemblies 38 and 42 may be tilted by the hinge coupling so that the blade arrangement direction is substantially parallel to that of the main wing non-tilting propulsion assembly 40a. When the flight mode is a cruising mode, such as during horizontal flight, the main wing and tail wing tilting propulsion assemblies 38 and 42 may be tilted by the hinge coupling so that the blade arrangement direction is at a certain angle relative to that of the main wing non-tilting propulsion assemblies 40a and 40b. FIG. 2 illustrates an assembly for tilting, utilizing hinge coupling between the mount and nacelle. In another example, the tilting assembly may be implemented using a different mechanism that does not rely on hinge coupling. For example, a multi-joint linkage may connect respective predetermined point of the nacelle, which houses the modules of the main wing non-tilting propulsion assemblies 40a and 40b, and the mount, and then the nacelle and the mount may not have a physical coupling point between them. This would allow the main wing and tail wing tilting propulsion assemblies 38 and 42 to pivot substantially perpendicularly to the fuselage 32 during hovering mode as the multi-joint linkage extends. In cruising mode, the multi-joint linkage contracts, allowing the main wing and tail wing tilting propulsion assemblies 38 and 42 to pivot substantially parallel to the fuselage 32. The tilting of the main wing and tail wing tilting propulsion assemblies 38 and 42 may be synchronized according to the flight mode, and the tilting of each propulsion assembly may be adjusted differently according to attitude control and flight conditions within the same flight mode.

The main wing non-tilting propulsion assemblies 40a and 40b may be arranged at the ends of the boom extending from the front area of the inboard section and the rear area of the outboard section of the main wing 34. The main wing non-tilting propulsion assemblies 40a and 40b may be formed as dual propellers that overlap each other, or as a single propeller, as illustrated in FIG. 2. The main wing non-tilting propulsion assemblies 40a and 40b are primarily activated during hovering mode, but they may also be activated according to attitude control and flight conditions even during cruising mode. In the present disclosure, the non-tilting propulsion assemblies 40a and 40b may also be referred to as lift rotors or lift assemblies.

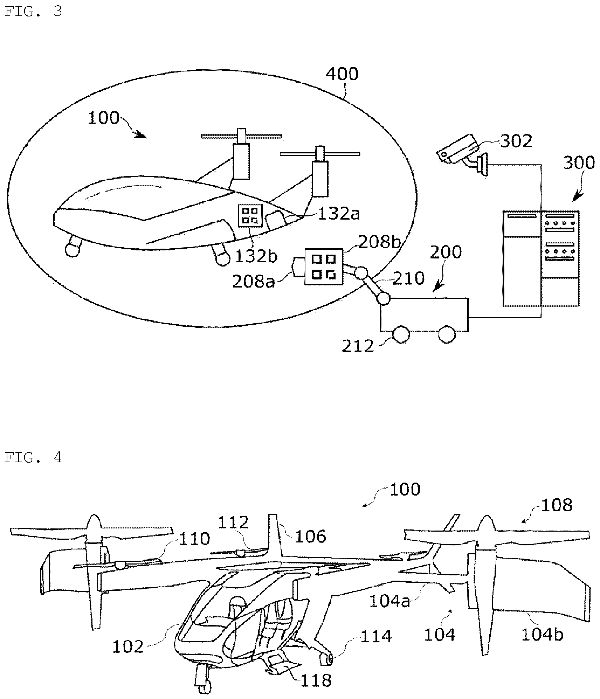

Although the present disclosure describes the tilting and non-tilting propulsion assemblies as being arranged as shown in FIG. 2, the arrangement of these propulsion assemblies is not limited to the example shown in FIG. 2 and the propulsion assemblies may be arranged in different locations. Furthermore, although FIG. 2 depicts four tilting propulsion assemblies and two non-tilting propulsion assemblies, the number of units is not limited to these, and the number may vary. Variations in the arrangement and number of tilting and non-tilting propulsion assemblies are illustrated in FIG. 4, but other forms not mentioned in the present disclosure may also be designed.

Referring now to FIG. 3, a charging system according to the present disclosure will be described. FIG. 3 is a diagram illustrating a charging system.

The charging system may include a charger 200 that performs power transfer with an air mobility device 100, a designated zone 400 provided for the air mobility device 100 to stop for power transfer, and a charging control apparatus 300 that manages overall operation of the air mobility device 100 in addition to controlling the air mobility device 100 and the charger 200 for power transfer.

The air mobility device 100 may be an aircraft equipped with electric propulsion system and include a power source unit supplying power to the electric propulsion system. The power source unit may be composed of an electric battery alone or a combination of an electric battery and a charging module to charge the battery. When the power source unit is composed solely of an electric battery, the electric battery may be charged via the charger 200. When the power source unit is a combination of an electric battery and a charging module, the power source unit may adopt a self-generating fuel cell as the charging module. The fuel cell can use a material, such as hydrogen gas, to generate power. In this disclosure, the power source unit may be composed solely of a battery, and the description may focus on controlling a connection components for power transfer between the battery and the charger 200. Here, the connection components may include a port electrically connected to the battery and a connector of the charger 200 that couples with the port. Power transfer may refer to the charging of the power source unit by the charger 200 or to bidirectional power supply between the charger 200 and the power source unit.

However, this may also be similarly applied to a combination of an electric battery and a fuel cell. In the case of such a combination, the fuel cell receives fuel from an external source, specifically, a tank connected to the fuel cell may receive fuel. The device supplying fuel to the tank may be a fuel filler. In this example, the connection components may include an inlet of the tank and a nozzle connector of the fuel filler. The designated zone 400 may be a space where the air mobility device 100 stops for fueling. In the case of the above combination, the charging control apparatus 300 may be replaced by a control device that controls both the fuel supply to the air mobility device 100 and the fuel filler, as well as controlling the overall operation of the air mobility device 100. The operations related to the connection between the port and connector and coupling and uncoupling, depending on the situation, may also be applicable to the inlet and nozzle connector, within a range that does not technologically deviate.

The air mobility device 100 may include AAM devices capable of transporting passengers and cargo within designated zones and providing personalized air services, small autonomous unmanned aerial vehicles (UAVs) or drone primarily used for transporting cargo or performing specific tasks such as filming or fluid spraying, and helicopters. Additionally, the air mobility device 100 may be maneuvered through manual operation, autonomy control, or a combination of both. Manual operation may be implemented through a pilot's direct operation of control devices equipped on the air mobility device 100 or through remote control by a control center or an external control station. Autonomy control, i.e., autonomous movement, may be performed through independent processing of the air mobility device 100 or through a combination of cooperative processing with the control center for remote control and the air mobility device 100.

The charger 200 may be a device with autonomous mobility. For example, the charger 200 may be equipped with a detection unit to sense the surrounding environment and autonomously move based on the sensing data from the detection unit and data received from the charging control apparatus 300. A charger 200 capable of autonomous movement may be implemented as a robot or an unmanned ground vehicle. When connected to the air mobility device 100, the charger 200 may receive power transmitted from the charging control apparatus 300 and supply the power to the air mobility device 100.

The designated zone 400 may be established at facilities where the air mobility device 100 lands and takes off. These facilities may be vertiports or vertistops. The designated zone 400 may encompass various zones such as landing areas, takeoff areas, holding areas, energy supply areas like charging sites, or maintenance areas for the air mobility device 100. The designated zone 400 may be identified as areas marked visually with signs, areas virtually provided in images acquired by video sensors, or areas partitioned by the installation of positioning radio modules or positioning acoustic modules.

The charging control apparatus 300 may control the actions related to the connection between the air mobility device 100 and the charger 200 for power transfer and the coupling and uncoupling of these devices depending on the situation. Additionally, the charging control apparatus 300 may control the power transfer between the air mobility device 100 and the charger 200. In addition to managing charging-related tasks, the charging control apparatus 300 may also be part of a management system that supports the overall operation of the air mobility device 100. The management system may manage various services related to the air mobility device 100, including landing and takeoff procedures, maintenance, operational services according to flight schedules, and integration services with ground mobility devices.

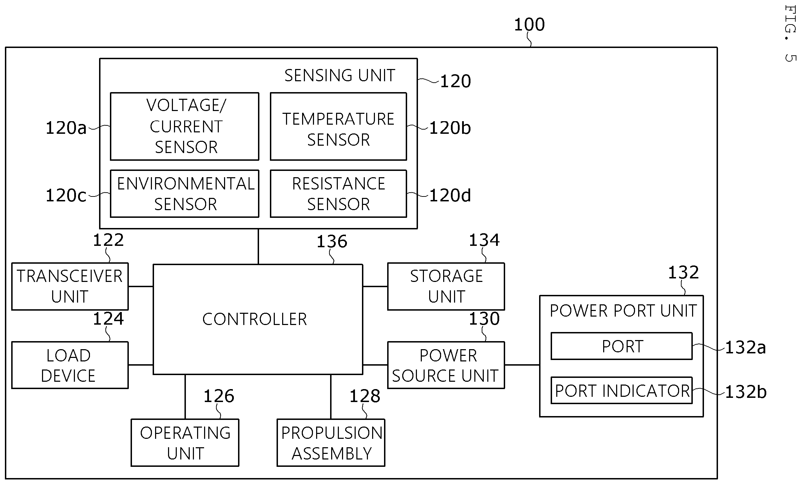

Hereinafter, a description is made of the air mobility device 100 utilizing the charging system according to the disclosure with reference to FIGS. 3 to 5. FIG. 4 is a diagram illustrating an air mobility device according to the disclosure. FIG. 5 is a diagram illustrating modules constituting an air mobility device according to the disclosure. In this disclosure, the air mobility device 100 is exemplified as employing a Vertical Take-off and Landing (VTOL) type vectored thrust, i.e., a tilting rotor, as a landing and propulsion method. However, the air mobility device may also be propelled using a lift and cruise method or a multicopper, among others. In addition, the air mobility device may also be manufactured as a short take-off and landing (STOL) or conventional take-off and landing (CTOL) type depending on the takeoff and landing method. Notwithstanding the foregoing, when the air mobility device 100 is a flying vehicle that is powered by the charger 200, this may be applicable to various types of flying vehicles.

The air mobility device 100 may include a streamlined fuselage 102, main wings 104 positioned on the left and right sides of the central area of the fuselage 102, and tail wings 106 positioned at the end regions of the fuselage 102. The fuselage 102 may accommodate spaces such as a cabin for pilots and passengers and a compartment for cargo. The main wings 104 and tail wings 106 may be configured as fixed-form wings.

The main wings 104 may have inboard and outboard sections. A tilting propulsion assembly 108 with a tilting rotor may be positioned in the forward area of the outboard on both the left and right sides. The tilting propulsion assembly 108 may be secured to the main wings by booms provided in the outboard sections of the main wings. Non-tilting propulsion assembly 110 and 112 arranged horizontally along the fuselage 102 may be positioned in the fore and aft areas of the extension rods in the inboard sections on both the left and right sides and may also be referred to as lift propulsion assembly. Each of the propulsion assembly may include a propeller with multiple blades, a hub with a shaft to which the ends of each blade are connected, a motor that supplies rotational power to the shaft, an inverter that controls the power from the power source unit 130 or converts the power form based on the flight situation, motor specifications, etc., and a propulsion assembly cooling module that cools the motor and inverter. In this disclosure, the propulsion assembly may be referred to as rotors, propulsion assemblies, etc.

Meanwhile, the outboard section of the main wing 104 is partitioned from the inboard section by a horizontal surface 104a and features a lift surface 104b, and the tilting propulsion assembly 108 may be mounted on a boom protruding from the lift surface 104b. For example, the tilting propulsion assembly 108 and the lift surface 104b may be configured to rotate or move together. As another example different from FIG. 4, the tilting propulsion assembly 108 may be coupled with a boom positioned at the end of the main wing 104, allowing the tilting propulsion assembly 108 to rotate in conjunction with the rotation of the boom. In another example, the lift surface 104b remains fixed, and the tilting propulsion assembly 108 may be operated such that only the hub and blades move or rotate.

Although described as arranged in FIG. 4 in this disclosure, the tilting propulsion assembly and non-tilting propulsion assembly are not limited to the arrangement in FIG. 4 and may be positioned in other locations. Additionally, although FIG. 4 shows two tilting propulsion assemblies and four non-tilting propulsion assemblies, the numbers are not limited to those specified and may be varied. Variations in the arrangement and number of tilting and non-tilting propulsion assemblies may be designed in many forms not mentioned in this disclosure.

The air mobility device 100 may include landing gear 114 for landing on land and/or water, which may be extendable or non-extendable. The landing gear 114 may be positioned at the front and rear of the air mobility device 100 and may include wheels, treads, pontoons, or other components that assist the air mobility device in landing on land and/or water. Additionally, the air mobility device 100 may include retractable steps 118 extending from the fuselage 102 and side doors for passenger boarding and disembarking.

The modules constituting the air mobility device according to this disclosure are described with reference to FIG. 5. FIG. 5 illustrates the detailed functions of the air mobility device 100, categorized into various modules.

The air mobility device 100 may include a sensing unit 120, a transceiver unit 122, and a load device 124. Additionally, the air mobility device 100 may be equipped with an operating unit 126, propulsion assembly 128, a power source unit 130, and a power port unit 132. The air mobility device 100 may also include a storage unit 134 and a controller 136.

The sensing unit 120 may be equipped with various detectors to detect various conditions and situations occurring in both external environments and inside the air mobility device 100. Although not shown in FIG. 5, the sensing unit 120 may also include a positioning sensor (or navigation device) to determine the location information of the air mobility device 100. The sensing unit 120 may acquire sensor data used for flight control, status data detecting the state of the modules constituting the air mobility device 100, and situational data detecting the condition of passengers and/or cargo, and provide these to the controller 136 to trigger specific functions and operations.

In detail, the sensing unit 120 may include a voltage/current sensor 120a, a temperature sensor 120b, an environmental sensor 120c, and a resistance sensor 120d.

The voltage/current sensor 120a may detect the electrical state of at least one of the battery of the power source unit 130 and the motors and inverters of the propulsion assembly 128. In the context of this disclosure, the voltage/current sensor 120a may detect the remaining charge amount (also referred to as a state of charge) of the battery in the power source unit 130 and the electrical transmission state of the power port unit 132 during power transfer between the air mobility device 100 and the charger 200. The controller 136 may assess various parameters such as flight mode, flight control status, battery condition, motor condition, inverter condition, charging status, coupling parameters, and fault/abnormal situations based on data detected by the voltage/current sensor 120a, which monitors the electrical state and variations of the battery, motor, inverter, and port 132a. The coupling parameters may include factors measured during the coupling of the port 132a and the connector 208a for power transfer.

The temperature sensor 120b may detect the temperature of at least one of the electrical battery in the power source unit 130 and the motors and inverters in the propulsion assembly 128. In the context of this disclosure, the temperature sensor 120b may sense the temperature of the battery and the power port unit 132 during power transfer.

The controller 136 may detect the flight mode, flight control status, control status of the battery, motors, and inverters, charging status, coupling parameters, and fault/abnormal situations based on the temperature data of the battery, engine, motors, inverters, and port 132a detected by the temperature sensor 120b.

The environmental sensor 120c may be equipped with cameras, radar sensors, lidar sensors, etc., to detect the external environment.

The resistance sensor 120d may detect the operational resistance of at least one of the electrical battery in the power source unit 130 or the motors and inverters in the propulsion assembly 128. During power transfer, the resistance sensor 120d may detect the electrical transmission states of the battery and port 132a by detecting the resistance in the battery due to power reception and the connection resistance between the port 132a and the connector 208a. The controller 136 may detect flight mode, flight control status, control status of the battery, motors, and inverter, charging status, coupling parameters, and fault/abnormal situations based on the resistance data of the battery, motors, inverters, port 132a/connector 208a connection detected by the resistance sensor 120d.

The types and data of the sensing unit 120 described above are merely illustrative, and additional sensors and sensor data detecting various situations not enumerated here may also be included.

The transceiver unit 122 may support communication with other devices to exchange data with external devices. In this disclosure, other devices may include the charging control apparatus 300 for controlling power transfer and the charger 200. Additionally, other devices may encompass management systems that control or exchange data related to the movement control of the air mobility device 100, auxiliary devices supporting mobility, or other mobility devices. The management unit is implemented as a server, and the charging control apparatus 300 may constitute a part of the management unit.

The load device 124, mounted on the air mobility device 100, may be a supplementary device that consumes power supplied from the power source unit 130 or power converted from the output of the power source unit 130, as required by commands for user utilization or management of cargo. The load device 124 may be a type of non-mobile electrical device, excluding the mobility power system used in components such as propulsion assembly 128, as described in this disclosure. The load device 124 may include various devices installed in the air mobility device 100, such as display systems, air conditioning systems, lighting systems, seat systems, and other components.

Although not depicted in FIGS. 2 and 3, the air mobility device 100 may include an interface for receiving requests for mobility control and operation of the load device 124. The interface may be implemented as a hardware device or a software interface. The hardware interface is a hardware controller for the user to trigger the desired movement of the air mobility device 100, such as an aviation joystick, but not limited thereto. The software interface may be a touch-enabled display, but not limited thereto.

The operating unit 126 and the propulsion assembly 128 may constitute an actuating unit that delivers power from the power source unit 130 to implement predetermined flight maneuvers and attitudes externally. In this disclosure, the actuating unit is referred to as an actuator, and these terms may be used interchangeably. The operating unit 126 may include at least one module for implementing flight maneuvers. For example, the operating unit 126 may include mechanical and software components that perform at least one of controlling flight attitudes such as roll, yaw, and pitch of the air mobility device 100, hovering control related to takeoff and landing, and flap control for altitude changes and turning maneuvers.

The propulsion assembly 128, as described with reference to FIG. 4, may include propellers with multiple blades, hubs, motors, inverters, thruster cooling module. When the air mobility device 100 is of the tilting rotor type, at least some of the plurality of propulsion assembly 128 may be tiltable. When the air mobility device 100 is of the lift-and-cruise type, the plurality of propulsion assembly 128 may be configured to have propulsion assembly for hovering and propulsion assembly for cruising. When the air mobility device 100 is of the multicopter type, the plurality of propulsion assembly 128 may be designed with propellers arranged parallel to the fuselage.

The power source unit 130 may generate and supply power and/or electricity for the propulsion assembly 128 and load device 124. In this disclosure, the propulsion assembly 128 are driven by electrical energy, and the power source unit 130 may include modules to supply power. The power source unit 130 may be composed of electric batteries as described in FIG. 4, or a combination of electric batteries and a charging module to charge these batteries.

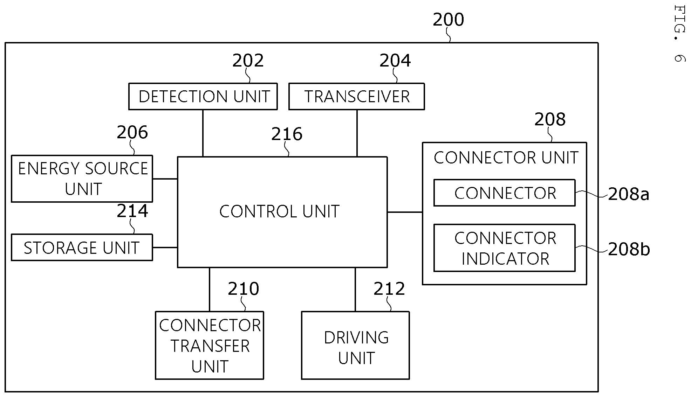

The power port unit 132 may include a port 132a and a port indicator 132b. The port 132a may be connected to the connector 206a (see FIG. 6) of the charger 200 for power transmission.

The port 132a may include connection terminals corresponding to the connector 208a and a fastening member to securely attach to the connector 208a. The connection terminals of the port 132a may include power lines for power transmission, signal lines for exchanging data related to power transmission with the charger 200, and ground lines.

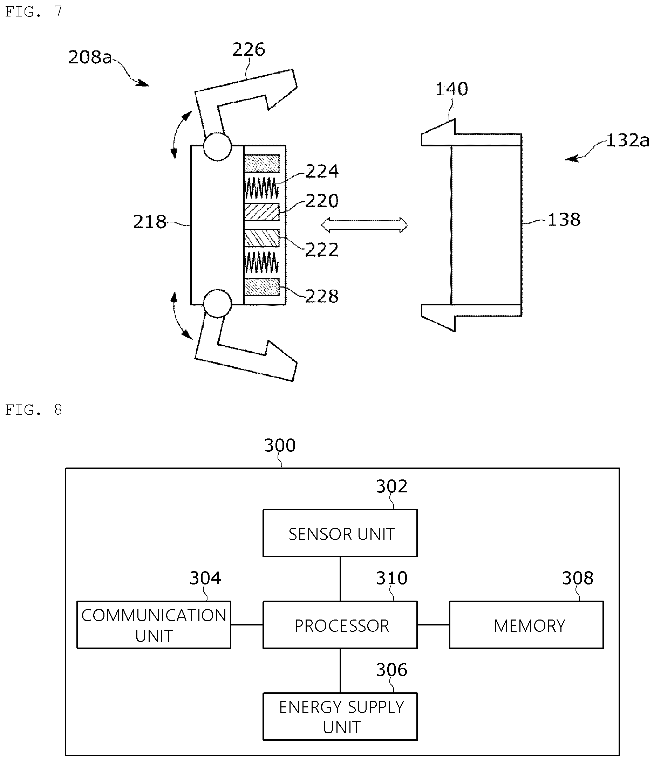

The port indicator 132b may include port information including an identifier for generating port location information (also referred to as port localization information) and charging specification information, and the sensor unit 302 (see FIG. 8) of the charging control apparatus 300 may identify the port indicator 132b such that the port information contained in the port indicator 132b is transmitted to the charging control apparatus 300.

The identifier may be recognized through the sensor unit 302. The charging control apparatus 300 may generate port location information including location and pose information (also referred to as bearing information, orientation information, or direction information) of the air mobility device 100 and the port 132a using the identifier of the port indicator 132b. The port location information may be used when the charger 200 approaches (e.g., moves toward) the port 132a to facilitate connection of the connector unit 208 (see FIG. 6) to the port 132a. The port indicator 132b may be at least one of a visual identifier recognizable by the sensor unit 302 of the charging control apparatus 300 and an identification device transmitting a signal of a predetermined form to the sensor unit 302 to identify the port 132a. The visual identifier may be a marking code provided adjacent to the port 132a on the fuselage 102, as illustrated in FIG. 3. The marking code may be a Quick Response (QR) code or a one-dimensional code, but is not limited thereto and may take various patterned forms. The marking code is not restricted to the location on the fuselage 102 depicted in FIG. 3 and may be placed on any part of the fuselage 102 where the charging control apparatus 300 can generate port location information. The identification device may be a location communication module (also referred to as a location broadcaster, a location communicator, or a location indicator) or a positioning acoustic module (also referred to as an acoustic positioning beacon). The location communication module may include a beacon transmitter or a positioning radio wave transmitter based on Ultra-Wide Band (UWB). The positioning acoustic module may be an acoustic transmitter utilizing sound reflection. The identification device may be installed on a part of the fuselage 102 where the charging control apparatus 300 can generate port location information.

The charging specification information may be charging standard information defined for the air mobility device 100. The charging specification information may include total battery capacity, rated transmission current, rated transmission voltage, rated transmission power, connector type of the port 132a, permissible temperature rise of the battery during power transfer, estimated charging time based on battery remaining capacity, model of the air mobility device 100, detailed specifications, etc. The charging specification information may be embedded in the identifier for generating port location information. As illustrated in FIG. 3, the identifier includes the charging specification information, and by recognizing the identifier, the sensor unit 302 of the charging control apparatus 300 may extract the charging specification information.

Meanwhile, the storage unit 134 stores applications and various data for controlling the air mobility device 100, and may load applications or read and record data upon request from the controller 136. The applications and data may include sensor data related to flight control, status data of mobility related to flight control, data received from other devices, and data related to energy control between the power source unit 130 and the propulsion assembly 128. In addition, the applications and data may include data related to the control of modules responsible for functions other than the aforementioned control, software related to the operation of the mobility computing system, information and applications for autonomous movement, route information, various information and control programs for passenger convenience, etc.

In the context of this disclosure, the controller 136 may process mobility control, path control, energy control, control of the load device 124, autonomous mobility control, convenience feature control, and so on, using the applications, instructions, and data stored in the storage unit 134. The controller 136 may be implemented as a single processing module. Alternatively, the processing described above may be distributed across a plurality of processing modules, and the controller 136 may refer to the plurality of processing modules collectively in this disclosure.

Hereinafter, a description is made of the charger 200 used in the charging system according to this disclosure with reference to FIGS. 1, 4, and 5. FIG. 6 is a diagram illustrating modules constituting a charger according to the disclosure. FIG. 7 is a diagram illustrating a port and connector according to the disclosure.

The charger 200 may include a detection unit 202, a transceiver 204, and an energy source unit 206.

The detection unit 202 may be equipped with various detectors to detect various conditions and situations occurring in both external environments and inside the charger 200. Additionally, the detection unit 202 may include a position sensor for determining the location information of the charger 200 and a State of Charge (SOC) detection sensor for assessing the charging status of the charger 200. The detection unit 202 may acquire sensor data used for power transmission control and mobility control, status data detecting the state of the modules constituting the charger 200, and situation data sensing the surrounding environment, and provide these data to the control unit 216 to trigger specific functions and operations. For example, the detection unit 202 may include voltage/current sensors, resistance sensors, temperature sensors, and environmental sensors. In the context of this disclosure, at least one of the voltage/current sensors, resistance sensors, and temperature sensors may detect the electrical transmission state of the connector unit 208 or the electrical transmission state between the port 132a and the connector 208a. The control unit 216 may determine coupling parameters based on the data detected by these sensors. The environmental sensors may include cameras, radar sensors, LiDAR sensors, and positioning sensors to detect external environments. The types and data of the detection unit 202 described above are merely illustrative, and additional sensors and sensor data detecting various situations not enumerated here may also be included.

The transceiver 204 may support communication with other devices to exchange data with external devices. In this disclosure, other devices may include the charging control apparatus 300 for controlling power transfer and the air mobility device 100. Additionally, other devices may encompass management systems that control or exchange data related to the movement control of the air mobility device 100, auxiliary devices supporting mobility, or other mobility devices. The management unit is implemented as a server, and the charging control apparatus 300 may constitute a part of the management unit.

The energy source unit 206 may provide power and energy used for the movement and control of the charger 200. The energy source unit 206 may be configured to have an electric battery. The energy source unit 206 may supply power to the port 132a and receive power from the charging control apparatus 300 through the connector unit 208. Alternatively, the energy source unit 206 may be composed of a combination of an electric battery and a charging module (e.g., a fuel cell) or a combination of a fossil fuel-based engine and a battery.

The charger 200 may include a connector unit 208, a connector transfer unit 210, and a driving unit 212.

The connector unit 208 may include a connector 208a and a connector indicator 208b. The connector 208a may be connected to the port 132a for power transmission.

The connector 208a may include connection terminals corresponding to the connection terminals of the port 132a. As illustrated in FIG. 7, the connection terminals of the port 132a are provided within the port slot 138, and the connector 208a may include power lines 220, signal lines 222, and grounding lines within the enclosure 218.

The connector 208a may be equipped with an elastic member 224 and a locking member 226. To provide a strong coupling force between the locking member 226 and the engagement protrusion 140, the elastic member 224 may apply a force in opposition to the coupling force between them to the port slot 138. Additionally, the elastic member 224 may facilitate the separation of the locking member 226 and the engagement protrusion 140 during the disengagement of the coupling between the port 132a and the connector 208a due to the elasticity of the elastic member 224. The locking member 226 may have a hinged structure to couple with a fastening member of the port 132a, i.e., the engagement protrusion 140. To achieve engagement and disengagement with the engagement protrusion 140, the locking member 226 may automatically engage with the engagement protrusion 140 or disengage from the engagement protrusion 140 in response to a control signal from the control unit 216. Although the locking member 226 and the engagement protrusion 140 are illustrated as examples of fastening members that couple the port 132a and the connector 208a in FIG. 5, the fastening members may be formed in various other configurations besides the structures described above.

The connector 208a may include a parameter detector 228 that measures coupling parameters based on the coupling between the port 132a and the connector 208a during power transfer between the air mobility device 100 and the charger 200. Coupling parameters may be factors estimating the gap or coupling force between the port 132a and the connector 208a, which vary during power transfer. These parameters may include the force detected between the port 132a and the connector 208a, the coupling gap detected between the port 132a and the connector 208a, and at least one of the electrical transmission states detected in at least one of the port and the connector during power transfer. The parameter detector 228 measuring the force may be a piezoelectric component that measures the contact force between the port 132a and the connector 208a in real time. For example, the parameter detector 228 measuring the coupling gap can be an infrared sensor or an ultrasonic sensor that measures the distance between the port 132a and the connector 208a in real time. For instance, the parameter detector 228 detecting the electrical transmission state may measure parameters such as current, voltage, contact resistance, and power applied to the connection terminals of the port 132a and the connection terminals of the connector 208a. The parameter detector 228 detecting the electrical transmission state may include at least one of the sensors of the aforementioned detection unit 202.

While this disclosure exemplifies the parameter detector 228 being installed in the connector 208a, the configuration is not limited thereto, and the parameter detector 228 may be mounted on at least one of the connector 208a and the port 132a.

The connector indicator 208b may transmit connector information, including an identifier for generating connector location information and charging support information, to the charging control apparatus 300.

The identifier may be recognized by the sensor unit 302 of the charging control apparatus 300. The charging control apparatus 300 may generate connector location information, including the location and pose information of the charger 200 and connector 208a based on the identifier from the connector indicator 208b. The connector location information may be utilized as relative location information along with the port location information, for the connector 208a to connect with the port 132a when the charger 200 approaches (e.g., moves toward) the port 132a. The connector indicator 208b may be at least one of a visual identifier and an identification device substantially the same as the port indicator 132b. A visual identifier, as exemplified in FIG. 3, may be a marking code provided adjacent to the connector 208a to be recognizable by the sensor unit 302 of the charging control apparatus 300. The marking code may be a Quick Response (QR) code or a one-dimensional code, but is not limited thereto and may take various patterned forms. The marking code is not restricted to the location adjacent to the connector 208a depicted in FIG. 3 and may be placed on any part of the charger 200 where the charging control apparatus 300 can generate connector location information. The identification device may transmit a signal of a predetermined form to the sensor unit 302 to identify the connector 208a. The identification device may essentially be the same as the port indicator 132b, serving as either a location communication module or a positioning acoustic module. The location communication module may include a beacon transmitter or a positioning radio wave transmitter based on Ultra-Wide Band (UWB). The positioning acoustic module may be an acoustic transmitter utilizing sound reflection. The identification device may be installed on a part of the fuselage 102 where the charging control apparatus 300 can generate port location information.

The charging support information may refer to detailed specifics available from the charger (200). The charging support information may include total battery capacity, rated transmission current, rated transmission voltage, rated transmission power, connector type of the port 208a, permissible temperature rise of the battery during power transfer, estimated charging time based on battery remaining capacity, model of the air mobility device 100, detailed specifications, etc. The charging support information may be embedded in the identifier for generating port location information. As illustrated in FIG. 3, the identifier includes the charging support information, and by recognizing the identifier, the sensor unit 302 of the charging control apparatus 300 may extract charging specification information.

The connector transfer unit 210 may include a component that finely moves the connector 208a to allow the connector 208a to couple with the port 132a. The connector transfer unit 210 may be equipped with a flexible transfer component, such as a multi-jointed arm, to allow the connector 208a to access the port 132a even when the charger 200 is stationary. The driving unit 212 may include a component that physically implements the movement of the charger 200, allowing the charger 200 to access the air mobility device 100. The driving unit 212 may be equipped with an assembly that autonomously moves under the instructions or remote control of the control unit 216 or the charging control apparatus 300. The driving unit 212 may be composed of wheels moving freely in space or a module moving on a track to reach the air mobility device 100.

The charger 200 may also include a storage unit 214 and a control unit 216.

Meanwhile, the storage unit 214 stores applications and various data for controlling the charger 200, and may load applications or read and record data upon request from the control unit 216. The applications and data may include sensor data related to charging control and the autonomous movement of the charger 200, status data of the charger 200 related to charging control and movement, data received from other devices, and data related to energy control between the power source unit 130 and the propulsion assembly 128. In addition, the applications and data may include data and control programs related to the control of modules responsible for functions other than those described above.

In the context of this disclosure, the control unit 216 may process charging control and control of autonomous mobility control of the charger 200, energy control, and so on, using the applications, instructions, and data stored in the storage unit 214. The control unit 216 may be implemented as a single processing module. Alternatively, the processing described above may be distributed across a plurality of processing modules, and the control unit 216 may refer to the plurality of processing modules collectively in this disclosure.

Hereinafter, a description is made of the charging control apparatus 300 used in the charging system according to the disclosure with reference to FIG. 8. FIG. 8 is a diagram illustrating modules constituting a charging control apparatus.

The charging control apparatus 300 may include a sensor unit 302, a transceiver unit 304, and an energy supply unit 306.

The sensor unit 302 may detect various conditions and situations occurring in both external environments and inside apparatus. The sensor unit 302 may detect the positions of the air mobility devices 100 and the charger 200. The sensor unit 302 may be equipped with a visual sensor to visually confirm the relative positions between the air mobility device 100 and designated zone 400 and the relative position between the air mobility device 100 and charger 200. Additionally, the sensor unit 302 may recognize the precise positions and poses (also referred to as bearings, orientations, or directions) of the port 132a and connector 208a. In the context of this disclosure, the sensor unit 302 may be equipped with sensors to recognize the port indicator 132b and connector indicator 208b. When the indicators are visual identifiers, such as marking codes, the sensor unit 302 may use an imaging sensor (e.g., a camera). When the indicators are identification devices, the sensor unit 302 may be configured with sensors capable of processing signals from the identification devices, which may include at least one of a location communication sensor and an acoustic sensor. The types and data of the sensor unit 302 described above are merely illustrative, and additional sensors and sensor data detecting various situations not enumerated here may also be included.

The communication unit 304 may support communication with other devices to exchange data with external devices. In this disclosure, other devices may include the air mobility device 100 and the charger 200. The energy supply unit 306 may have an energy source to supply power to the charger 200, which performs power transfer with the air mobility device 100. The charger 200 may store power received from the energy supply unit 306 and then be detached from the energy supply unit 306 and moved. Alternatively, the charger 200 may also be moved without being separated from the energy supply unit 306.

The charging control apparatus 300 may also include a memory 308 and a processor 310.

The memory 308 may store applications and various data for controlling the charging control apparatus 300, and may load applications or read and record data upon request from the processor 310. The data may include sensor data and status data related to the movement and power transfer of the charger 200, charging status data related to the power transfer between the air mobility device 100 and the charger 200, and data related to transmission control. The memory 308 may also store mobility status information related to the operational status and flight operations of the air mobility device 100. In detail, flight operation information and flight information in the mobility status information is managed by the memory 308, and the flight information may include at least one of air mobility device schedule information, boarding information, and cargo information. Schedule information may include departure/arrival times, destinations, waypoints, and flight paths. Boarding information may include the number of expected passengers, the number of passengers embarking/disembarking at waypoints/destinations, and the total weight of all passengers. Cargo information might include the cargo weight and the loading/unloading weights at waypoints/destinations.

In addition, when the charging control apparatus 300 operates as part of a management device, the management device including the charging control apparatus 300 may include data and control programs related to functions other than aforementioned control.

The processor 310 may process charging control and control of autonomous mobility control of the charter, energy control, and so on, using the applications, instructions, and data stored in the memory 308.

The processor 310 may determine whether the air mobility device 100 is stationary within a designated zone 400, and upon the air mobility device 100 being stationary, control the charger 200 to approach (e.g., move toward) the air mobility device 100 and connect the connector 208a to the port 132a.

The processor 310 may identify the port indicator 132b and the connector indicator 208b via the sensor unit 302 to generate port location information and connector location information. Then, the processor 310 may generate relative location information between the port 132a and connector 208a based on the generated information, and the relative location information includes relative position information and relative pose information in detail. The processor 310 may control the charger 200 to autonomously approach (e.g., move toward) the air mobility device 100 based on the relative location information, allowing the port 132a and connector 208a to be coupled together.

Furthermore, the processor 310 may control the air mobility device 100 and the charger 200 to facilitate power transmission according to the power supply mode therebetween, and during power transfer, determine whether the air mobility device is stationary within the designated zone in response to the coupling parameters of the coupling failing to meet or satisfy an allowable coupling conditions (also referred to as a threshold condition). When the air mobility device 100 moves during power transfer and stops (e.g., comes to a stop) within the designated zone 400, the processor 310 may execute a process to control the charger to approach (e.g., move toward) the air mobility device 100 to maintain the coupling between the port 132a and the connector 208a. Conversely, when the air mobility device 100 moves during power transfer and stops (e.g., moves and/or comes to a stop) outside the designated zone 400, the processor 310 may execute a process to control the air mobility device 100 and the charger 200 to disengage the coupling between the port 132a and the connector 208a.

The processor 310 may be implemented as a single processing module. Alternatively, the processing described above may be distributed across a plurality of processing modules, and the control unit 216 may refer to the plurality of processing modules collectively in this disclosure. Additionally, when the charging control apparatus 300 functions as part of a management device, the management device including the charging control apparatus 300 may perform various processes related to the air mobility device 100 and the vertiport, in addition to the aforementioned control.

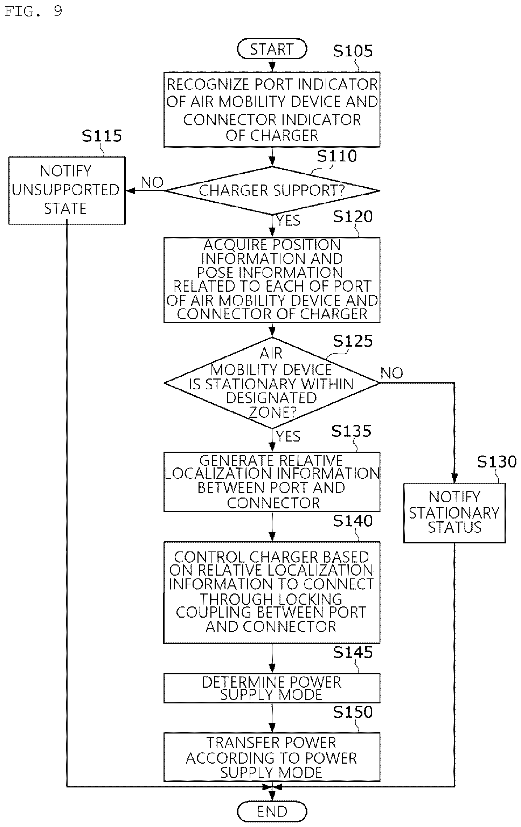

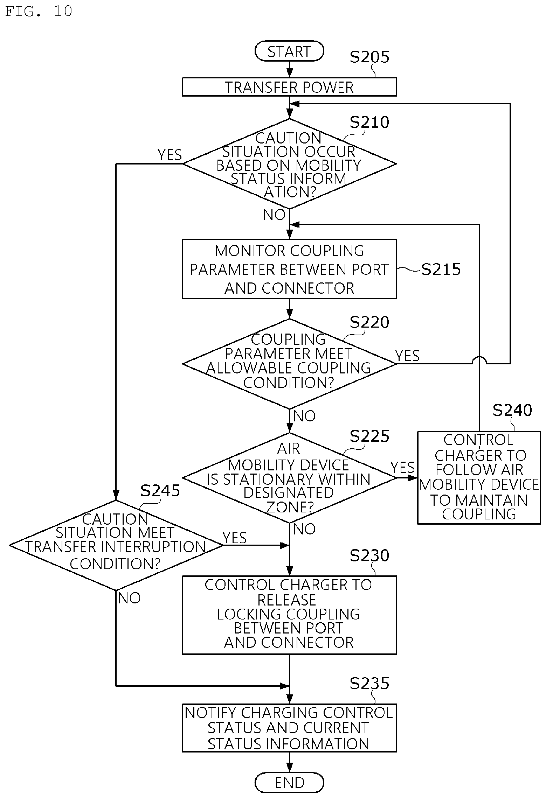

Hereinafter, a description is made of the charging control method of the air mobility device with reference to FIGS. 3 to 9. One, some, or all steps of the example methods of FIGs. 9 and 10, or portions thereof, may be performed by one or more components as described in FIGs. 1, 5, 6, and 8. One or some, steps of the example methods of FIGs. 9 and 10 may be omitted, performed in other orders, and/or otherwise modified, and/or one or more additional steps may be added. FIG. 9 is a flowchart illustrating a method for charging control of an air mobility device. The process of FIG. 9 is primarily executed by the processor 310 of the charging control apparatus 300, and for the sake of convenience, the processor 310 of the charging control apparatus 300 may be abbreviated as or used interchangeably with the charging control apparatus 300.

The air mobility device 100 is stationary in a location with a designated zone 400, and power transmission between the air mobility device 100 and the charger 200 may be requested by either the air mobility device 100 or the charging control apparatus 300. A location with a designated zone 400 may be a vertiport or a vertistop.

In operation S105, the charging control apparatus 300 may identify an idle charger 200 and recognize the port indicator 132b of the air mobility device 100 and the connector indicator 208b of the charger 200 via the sensor unit 302.

When there are multiple idle chargers 200, the charging control apparatus 300 may select an idle charger 200 based on service priority and distance from the air mobility device 100. The selection method for a charger is not limited to the above example and may be determined in various ways.

When the port indicator 132b and connector indicator 208b are marking codes such as quick-response (QR) codes, the imaging sensor of the sensor unit 302 may recognize the marking codes in the video of the air mobility device 100 and the charger 200 captured by the sensor unit 302. When the port indicator 132b and connector indicator 208b are identification devices, the sensor in the sensor unit 302 that processes signals from identification devices may recognize signals transmitted from the identification devices.

Subsequently, the charging control apparatus 300 may extract the charging specification information of the air mobility device 100 and the charging support information of the charger 200 from the port indicator 132b and connector indicator 208b, respectively, and determine in operation S110 whether the charger 200 can support power transmission with the air mobility device 100.

Based on the charging support information and charging specification information, The charging control apparatus 300 may acquire various data of each device such as rated transmission current, rated transmission voltage, rated transmission power, connector type, total battery capacity, available power, allowable battery rise temperature during power transfer, expected battery rise temperature through the charger 200, expected battery charging time, and charging service schedule of the charger 200.

Although the disclosure exemplifies obtaining charging specification and support information from the port indicator 132b and connector indicator 208b, the air mobility device 100 and charger 200 may alternatively transmit this data directly to the charging control apparatus 300. Alternatively, the air mobility device 100 may transmit charging specification information to the charging control apparatus 300, which holds information related to the charger 200 selected by the device or recognized by the connector indicator 208b, allowing verification of charging support information from the held data.

When the charger 200 cannot support power transmission with the air mobility device 100, the charging control apparatus 300 may notify the charger 200 and the air mobility device 100 of the unsupported state in operation S115. The charging control apparatus 300 may select a secondary charger different from the initially designated one to perform operations S105 and S110.

When the charger 200 can support power transmission with the air mobility device 100, the charging control apparatus 300 may acquire the port location information and the connector location information in operation S120 based on the port indicator 132b and connector indicator 208b recognized by the sensor unit 302.

The port location information may include the location information and pose information of port 132a, and the connector location information may include the location and pose details of connector 208a.

When the port indicator 132b and connector indicator 208b are marking codes, the processor 310 may identify the port indicator 132b, connector indicator 208b, and feature points in the surrounding environment from images captured by the sensor unit 302, and based on the relationship between the identified points and the position of the sensor unit 302, acquire the position information for port 132a and connector 208a. The pose information of the port 132a may include array direction and height of the port 132a, and the pose information of the connector 208a may include array direction, array angle, and height of the connector 208a. Based on the port indicator 132b and connector indicator 208b recognized in the images, the processor 310 may estimate the pose of port 132a and connector 208a, thereby obtaining pose information of the port 132a and connector 208a.

When the port indicator 132b and connector indicator 208b are identification devices, the processor 310 may estimate the positions of port 132a and connector 208a based on the electromagnetic or acoustic signals received by the sensor unit 302. In detail, by responding to signals transmitted by the identification devices and considering the time it takes for these signals to reach the sensor unit 302 and the direction from which the signals are received, the processor 310 may estimate the position information of port 132a and connector 208a. The processor 310 may also obtain pose information of the port 132a and connector 208a by estimating the poses of each of port 132a and connector 208a based on the direction of reception of these signals.

Next, the processor 310 may determine in operation S125 whether the air mobility device 100 is stationary within the designated zone 400.

The processor 310 may determine whether the air mobility device 100 is stationary within the designated zone 400 based on images related to the air mobility device 100 acquired by the imaging sensor of the sensor unit 302. For example, by utilizing the full view of the air mobility device 100 appearing in the image, the processor 310 may determine that at least one specific part of the air mobility device 100 is located within the designated zone 400. This specific part may include all parts of the fuselage 102 or a part of the device (e.g., the landing gear 114). Alternatively, the processor 310 may determine whether the air mobility device 10 is stationary within the designated zone 400 by utilizing the overall shape of the air mobility device 100 as inferred from the marking code of the port indicator 132b or identification device. In this case, the designated zone 400 may be identified by one of a visual physical marker, a virtual marker, a positioning radio module, or a positioning acoustic module.

When the air mobility device 100 is outside the designated zone 400, the processor 310 may notify the stationary status to the air mobility device 100 in operation S130.

The processor 310 may transmit to the air mobility device 100 a message including information that the air mobility device 100 is located outside the designated zone 400. Upon receiving the message, the air mobility device 100 may move into the designated zone 400 under the control of the charging control apparatus 300.

When the air mobility device 100 is stationary within the designated zone 400, the processor 310 may generate relative location information between the port 132a and the connector 208a based on the port location information and connector location information in operation S135.

The processor 310 of the charging control apparatus 300 may generate relative location information and relative pose information between the port 132a and the connector 208a, based on the respective position and pose information of the port 132a and connector 208a.

Subsequently, the processor 310 may control the charger 200 to approach (e.g., move toward) the air mobility device 100 based on the relative location information. For the locking connection between the port 132a and connector 208a, the processor 310 may control the position and pose of the connector 208a based on the relative location information that varies with the movement of the charger 200 in operation S140. The processor 310 may control the air mobility device 100 and the charger 200 to make a coupling, between the connector 208a and the port 132a for transfer of power from the charger 200 and the air mobility device 100.

The processor 310 may request the charger 200 to move towards the air mobility device 100 for approach. Based on relative location information, the processor 310 may transmit the desired movement path for the charger 200 and the appropriate pose for the connector 208a to the charger 200, and the control unit 216 of the charger 200 may control the driving unit 212 and the connector transfer unit 210 based on the transmitted path and pose. The processor 310 may continuously monitor the connector indicator 208b on the moving charger 200 to obtain relative location information as the charger moves. The processor 310 may control the charger 200 to minimize the values derived from the relative location information. The processor 310 may set the movement path of the charger 200 such that the values derived from the relative location information between the port 132a and the connector 208a to reach preset values, allowing the connector 208a to approach (e.g., move toward) the port 132a. The control unit 216 of the charger 200 may control the driving unit 212 to autonomously drive the charger 200 along the movement path. Additionally, the processor 310 may set the pose of the connector 208a such that the alignment direction, alignment angle, and height of the connector 208a match the port 132a by minimizing the values derived from the relative location information, and the control unit 216 may the connector transfer unit 210 and the driving unit 212 to position the connector 208a accordingly based on this pose.

Once the locking member 226 of the connector 208a is engaged with the engagement protrusion 140 of the port 132a under the control of the processor 310, at least one of the charger 200 and the air mobility device 100 may notify the charging control apparatus 300 of the engagement. The engagement may be detected by the parameter detector 228 of the connector 208a or other detectors. Alternatively, the charging control apparatus 300 may recognize the engagement by identifying the port indicator 132b and the connector indicator 208b and verifying the values of the relative location information corresponding to the engagement.

Next, the charging control apparatus 300 may determine the power supply mode in operation S145 and control the charger 200 and the air mobility device 100 to perform power transmission according to the determined mode in operation S150.

The power supply mode may be either the charging of the power source unit 130 via the charger 200 or bidirectional power transfer between the charger 200 and the power source unit 130. Bidirectional power transfer may refer to power sharing between the air mobility device 100 and the charger 200.

Hereinafter, a description is made of the charging control method of the air mobility device with reference to FIGS. 3 to 8 and 8. FIG. 10 is a flowchart illustrating a method for charging control of an air mobility device.

The power transfer between the charger 200 and the air mobility device 100 may be carried out in operation S205 by the coupling between the port 132a and the connector 208a according to operation S150.

Subsequently, during the power transfer, the processor 310 may determine in operation S210 whether a caution situation arises (e.g., a caution level has exceeded a threshold value) based on the mobility status information related to the operational status and flight operations of the air mobility device 100.

The mobility status information comprises operational status information related to the operation of at least one component constituting the air mobility device as well as being used for power transfer control and flight information related to flight operation.

The operational status information may include charging status and component status.

The charging status may include at least one of the remaining charge amount of the air mobility device 100, the battery temperature measured during power transfer, and the electrical state of the battery. The battery temperature may be measured in real time by the temperature sensor 120b. The electrical state of the battery may include at least one of the current, voltage, and resistance detected from the battery or port 132a by the voltage/current sensor 120a and resistance sensor 120d during power transfer. The air mobility device 100 may transmit data related to the charging status to the charging control apparatus 300 during power transfer.

The component status may be the current status data of components obtained through detection or inspection by the air mobility device 100. Components related to power transfer may include cells and modules that make up the battery, as well as sensors of the power source unit 130 as shown in FIG. 5, a cooling system for the battery, wiring, the controller 136, and the storage unit 134. Components may also include parts unrelated to power transfer, such as the motor and inverter of the propulsion assembly 128, modules that make up the operating unit 126, and load device 124. The air mobility device 100 may detect the status of components via the sensing unit 120 and generate current status data for the components. Alternatively, when maintenance inspections are conducted on the air mobility device 100 during power transfer, current status data resulting from these inspections may be generated. The generated current status data may be transmitted to the charging control apparatus 300.

Flight information includes data related to the flight operations of the air mobility device 100, which may include at least one of schedule information, passenger information, and cargo information. This flight information may be managed by the charging control apparatus 300 or transmitted from the air mobility device 100 to the charging control apparatus 300.

Meanwhile, the occurrence of a caution situation (also referred to as a caution level) may be determined through analysis by comparing the data within the charging status with the alert threshold value for each data. The occurrence of a caution situation may also be determined through analysis by comparing the status data within the component status with the alert reference values. For example, the occurrence of a caution situation may be determined by comparing the schedule information of the air mobility device 100 with the expected power transfer time.

When the analysis of the mobility status information results in no caution situation (e.g., a caution level is below a threshold value), the processor 310 may continuously monitor, in operation S215, the coupling parameters resulting from the engagement between the port 132a and the connector 208a and determine in operation S220 whether the coupling parameters meet the allowable coupling conditions.

The coupling parameters may be measured via the parameter detector 228 of the connector 208a. These parameters may include the force detected between the port 132a and the connector 208a, the coupling gap detected between the port 132a and the connector 208a, and at least one of the electrical transmission states detected in at least one of the port and the connector during power transfer. As described above with reference to FIGS. 3 and 4, the parameter detector 228 for measuring the acting force may be a piezoelectric element, and the parameter detector 228 for measuring the coupling gap may be an infrared sensor or an ultrasonic sensor. The parameter detector 228 detecting the electrical transmission state may measure parameters such as current, voltage, contact resistance, and power applied to the connection terminals of the port 132a and the connection terminals of the connector 208a. The parameter detector 228 detecting the electrical transmission state may include at least one of the sensors of the aforementioned detection unit 202.

The allowable coupling conditions may include the gap or repulsive force between the port 132a and the connector 208a that ensure normal connection coupling, normal power transmission, and absence of connector component failures. The parameter detector 228 may transmit the measured coupling parameters to the charging control apparatus 300. When the detected actuation force and coupling gap are both below the respective threshold values, the processor 310 of the charging control apparatus 300 may determine that the coupling parameters meet the allowable coupling conditions. Conversely, when the actuation force and coupling gap are detected to be equal to or greater than the respective threshold values, the processor 310 may determine that the coupling parameters do not meet the allowable coupling conditions. When the current, voltage, and power as electrical transmission states is equal to or greater than the respective threshold values, the coupling parameters may be determined to meet the allowable coupling conditions. When the contact resistance is equal to or less than the threshold resistance value, the coupling parameters may also be determined to meet the allowable coupling conditions.

When the coupling parameters meet the allowable coupling conditions, monitoring of the coupling parameters may be conducted in operation S215.

When the coupling parameters do not meet the allowable coupling conditions, the processor 310 may determine in operation S225 whether the air mobility device 100 is stationary within a designated zone 400 during power transfer based on sensor data related to the air mobility device 100 detected via the sensor unit 302.

The movement of the air mobility device 100 during power transfer may occur due to various reasons such as weak braking force on the fixed landing gear 114 against external forces, intentional movements of the air mobility device 100, and other factors. The movement of the air mobility device may be one of the causes for changes in the coupling parameters in operation S220.

Operations related to being stationary within the designated zone 400 are essentially the same as in step S125, so detailed explanation thereof is omitted. Meanwhile, the criteria for determining stationary within the designated zone 400 in operation S225 may be the same as or different from those in operation S125. For stable power transmission and prevention of connection components damage, the criteria for decision-making in operation S225 may be set more strictly or within a narrower range compared to operation S125. For example, unlike in operation S125 where the air mobility device 100 is considered stationary within the designated zone 400 when the landing gear 114 of the air mobility device 100 is located within the zone 400, in operation S225, the entire device 100 must be fully enclosed within the designated zone 400 to be considered stationary within the designated zone 400. As another example, the designated zone (or second designated zone) in operation S225 may be smaller than the designated zone (or first designated zone) in operation S125, allowing for multiple designated zones to be provided differently based on the stationary decision for each step.

Conversely, when the air mobility device 100 moves during power transfer and stops outside the designated zone 400, the processor 310 may execute a process to control the air mobility device 100 and the charger 200 to disengage the coupling between the port 132a and the connector 208a in operation S230.

The processor 310 may request the release of locking connection and interruption of power transmission between the charger 200 and the air mobility device 100. The control unit 216 of the charger 200 and the controller 136 of the air mobility device 100 may stop power transmission between each other. The control unit 216 may control the locking member 226 to alleviate the coupling force between the port 132a and the connector 208a, allowing the locking member 226 to operate to automatically disengage from the engagement protrusion 140. Additionally, the control unit 216 may control at least one of the connector transfer unit 210 and the driving unit 212 to further separate the connector 208a from the port 132a.

Next, in operation S235, the processor 310 may transmit to the air mobility device 100 a message containing status information related to the interruption of power transmission due to the release of the locking connection and the current status information related to stationary condition within the designated zone 400.

When it is determined in operation S225 that the air mobility device 100 is stationery within the designated area 400 even while power transmission is ongoing, the processor 310 may control the charger 200, in operation S240, to access the air mobility device 100 to maintain the connection between the port 132a and the connector 208a.

The processor 310 may control the movement of the charger 200 to follow the moving air mobility device 100. In addition, the processor 310 may control the charger 200 to follow the air mobility device 100 while verifying the coupling parameters received from the charger 200 to ensure the coupling parameters meet (e.g., satisfy) the allowable coupling conditions. The processor 310 may also confirm the location of the air mobility device 100 recognized by the sensor unit 302 and transmit the data related to the position to the charger 200. Here, the position may be estimated based on the images of the air mobility device 100 acquired from the imaging sensor of the sensor unit 302 or the port indicator 132b. The control unit 216 of the charger 200 may control at least one of the connector transfer unit 210 and the driving unit 212 based on position-related data to maintain the coupling of the connector 208a to the port 132a. In this case, the parameter detector 228 may monitor the coupling parameters according to the movement of the connector 208a, and the processor 310 and the control unit 216 may control the movement and connection of the connector 208a towards the port 132a to ensure that the coupling parameters meet the allowable coupling conditions.

Meanwhile, in step S210, when the analysis results of the mobility status information indicates that no caution situation has occurred (e.g., a caution level is below a threshold value), the processor 310 may determine in operation S245 whether the caution situation meets the transfer interruption condition.

The processor 310 may analyze whether information related to a caution situation, such as charging status, component current status data, and/or flight information, falls under the transfer interruption condition that is not suitable for maintaining power transmission. Regarding charging status, for example, when the battery temperature or electrical state during power transfer is predicted to cause battery failure or damage due to continued transfer, the processor 310 may determine that the caution situation meets the transfer interruption condition. Regarding component current status data, when the sensor that detects the battery status, the cooling system for the battery, or the wiring are detected to be abnormal or malfunctioning during power transfer, the processor 310 may determine that the caution situation meets the transfer interruption condition. Regarding flight information, when the expected power transmission time is longer than the departure time or waiting time due to a change in the schedule information of the device 100, the processor 310 may determine that the caution situation meets the transfer interruption condition (e.g., a caution level has exceeded a threshold value to warrant an interruption of power transfer).

When the caution situation meets the transfer interruption condition, the processor 310 may control both the air mobility device 100 and the charger 200 to release the locking connection between the port 132a and the connector 208a, disconnecting them in operation S230. This process is essentially the same as described in operation S230.

Subsequently, the processor 310 may notify, in operation S235, to the air mobility device 100 a message containing charging control status related to the power transmission interruption resulting from the release of the locking connection and current status information related to the caution situation meeting the transfer interruption condition.

In operation S245, when the caution situation does not meet the transfer interruption condition, the processor 310 may control the charger 200 and the air mobility device 100 to maintain power transmission through the coupling between the port 132a and the connector 208a. Additionally, the processor 310 may notify, in operation S235, to the air mobility device 100 a message containing charging control status related to the power transmission maintenance and current status information related to the caution situation that does not meet the transfer interruption condition. While power transmission is maintained, the processor 310 may repeatedly execute operations S210 to S245.

According to the present disclosure, there is provided a method for charging control of an air mobility device, the method comprising: controlling an air mobility device and an charger to transfer power between a port of the air mobility device and a connector of the charger by coupling the port and the connector; determining, in response to a coupling parameter in the coupling failing to meet an allowable coupling condition, whether the air mobility device is stationary within a designated zone; and controlling, in response to the air mobility device stopping outside the designated zone, the air mobility device and the charger to release the coupling between the port and the connector.

According to one or more example embodiments of the present disclosure in the method, the coupling parameter may comprise at least one of an actuation force detected between the port and the connector, a coupling gap detected between the port and the connector, and an electrical transmission status detected in at least one of the port and the connector during power transfer.

The method may further comprise: controlling, in response to the air mobility device moving and stopping within the designated zone during power transfer, the charger to approach the air mobility device to maintain the coupling by the coupling parameter meeting the allowable coupling condition.

The method may further comprise: determining whether a caution situation occurs by analyzing mobility status information related to the operational status and flight operation of the air mobility device during power transfer; determining, in response to the occurrence of the caution situation, whether the caution situation meets a transfer interruption condition; controlling, in response to the caution situation meeting the transfer interruption condition, the air mobility device and the charger to release the coupling; and in response to the caution situation failing to meet the transfer interruption condition, maintaining the coupling and notifying a message generated based on the maintained coupling and the caution situation.

The mobility status information may comprise operational status information related to the operation of at least one component constituting the air mobility device as well as being used for power transfer control and flight information related to flight operation. The operational status information may comprise charging status and component status, the charging status comprising at least one of remaining charge amount of the air mobility device, temperature of a battery constituting the air mobility device, and electrical state of the battery, the component status comprising current status data of the component obtained through detection or inspection by the air mobility device. Also, the flight information may comprise at least one of schedule information, passenger information, and cargo information.

The method may further comprise: generating, before controlling the air mobility device and the charger to transfer power, relative location information between the port and the connector based on position information and pose information of each of the port and the connector; and coupling the port and the connector by controlling the charger based on the relative location information.

The position information and pose information of the port may be at least acquired by recognizing a port indicator provided on the air mobility device via a sensor unit of an apparatus controlling the charger, and the position information and pose information of the connector may be acquired by recognizing a connector indicator provided on the charger via the sensor unit.

The port indicator and the connector indicator may comprise at least one of a marking code, location communication module, and position acoustic module, and the sensor unit may comprise at least one of an imaging sensor, a location communication sensor, and an acoustic sensor.

The method further comprises determining, before the generating of the relative location information, whether the air mobility device is stationary within the designated zone, wherein the generating of the relative location information is performed in response to the air mobility device being stationary within the designated zone.

The method further comprises determining, before the generating of the relative location information, whether the charger supports power transfer with the air mobility device based on charging support information of the charger and charging specification information of the air mobility device, wherein the generating of the relative location information is performed in response to the charger supporting the power transfer.

There may be provided an apparatus for charging control of an air mobility device, the apparatus comprising: a sensor unit configured to sense surrounding environment; a memory configured to store at least one instruction; and at least one processor configured to execute the at least one instruction stored in the memory. The processor is configured to: control the air mobility device and the charger to transfer power between a port of the air mobility device and a connector of the charger by coupling the port and the connector, determine, in response to a coupling parameter in the coupling failing to meet an allowable coupling condition, whether the air mobility device is stationary within a designated zone, and control, in response to the air mobility device stopping outside the designated zone, the air mobility device and the charger to release the coupling between the port and the connector.

While the above description details power transmission between an electric battery of an air mobility device and a charger, it can be similarly applied to a combination of electric batteries and fuel cells. Specifically, the technical concepts related to the port and connector in one or more example embodiments can be applied to the filler neck of a tank connected to a fuel cell and the nozzle connector of a fuel dispenser for refueling. Moreover, the descriptions that accompany FIGS. 7 and 8 can be applied to air mobility devices equipped with fuel cells and fuel dispensers.

While the examples focus on air mobility devices, the underlying concepts can be applied to other land, sea, and underwater vehicles, provided they utilize a power source consisting of independent electric batteries or a combination of batteries and fuel cells, and there are no technical barriers to implementation.

While the exemplary methods of the present disclosure described above are represented as a series of operations for clarity of description, it is not intended to limit the order in which the steps are performed, and the steps may be performed simultaneously or in different order as necessary. In order to implement the method according to the present disclosure, the described steps may further include other steps, may include remaining steps except for some of the steps, or may include other additional steps except for some of the steps.

The various example embodiments of the present disclosure are not a list of all possible combinations and are intended to describe representative aspects of the present disclosure, and the matters described in the various example embodiments may be applied independently or in combination of two or more.

In addition, various example embodiments of the present disclosure may be implemented in hardware, firmware, software, or a combination thereof. In the case of implementing the present disclosure by hardware, the present disclosure can be implemented with application specific integrated circuits (ASICs), digital signal processors (DSPs), digital signal processing devices (DSPDs), programmable logic devices (PLDs), field programmable gate arrays (FPGAs), general processors, controllers, microcontrollers, microprocessors, etc.

The scope of the disclosure includes software or machine-executable commands (e.g., an operating system, an application, firmware, a program, etc.) for enabling operations according to the methods of various example embodiments to be executed on an apparatus or a computer, a non-transitory computer-readable medium having such software or commands stored thereon and executable on the apparatus or the computer.

## Claims

1. A method comprising:
controlling, by one or more processors, an air mobility device and a charger to make a coupling, between a connector of the charger and a port of the air mobility device, for power transfer from the charger to the air mobility device;
determining, based on a coupling parameter of the coupling between the connector and the port not satisfying a threshold condition, whether the air mobility device is stationary within a designated zone; and
controlling, based on the air mobility device stopping outside the designated zone, the air mobility device and the charger to release the coupling between the port and the connector.

2. The method of claim 1, wherein the coupling parameter comprises at least one of: an actuation force between the port and the connector, a coupling gap between the port and the connector, or an electrical transmission status, during the power transfer, of at least one of the port or the connector.

3. The method of claim 1 or 2, further comprising controlling, based on the air mobility device moving and stopping within the designated zone during the power transfer, the charger to approach the air mobility device to maintain the coupling such that the coupling parameter satisfies the threshold condition.

4. The method of anyone of claims 1-3, further comprising:
determining whether a caution situation occurs based on mobility status information of the air mobility device;
determining whether the caution situation satisfies a transfer interruption condition on the basis of the occurrence of the caution situation;
controlling the air mobility device and the charger to release the coupling on the basis of the caution situation satisfying the transfer interruption condition; and
maintaining the coupling and notifying a message generated based on the maintained coupling and the caution situation on the basis of the caution situation dissatisfying the transfer interruption condition,
wherein, optionally, the mobility status information comprises:
operational status information related to an operation of at least one component of the air mobility device, the operational status information being used for power transfer control, and
flight information related to the first flight operation of the air mobility device,
wherein the operational status information comprises a charging status and a component status,
wherein the charging status comprises at least one of: **a** remaining charge amount of the air mobility device, a temperature of a battery of the air mobility device, or an electrical state of the battery,
wherein the component status comprises status data of the at least one component of the air mobility device,
wherein the status data is obtained via a sensor of the air mobility device, and
wherein the flight information comprises at least one of: schedule information, passenger information, or cargo information.

5. The method of anyone of claims 1-4, wherein the controlling of the air mobility device and the charger to make the coupling comprises:
generating, based on position information and bearing information of each of the port and the connector, relative location information indicating relative locations of the port and the connector; and
controlling the air mobility device and the charger to make the coupling by controlling, based on the relative location information, a movement of the charger,
wherein, optionally, the method further comprises:
determining the position information and the bearing information of the port by recognizing, via a sensor of an apparatus controlling the charger, a port indicator provided on the air mobility device; and
determining the position information and the bearing information of the connector by recognizing, via the sensor, a connector indicator provided on the charger,
wherein, optionally, the port indicator and the connector indicator comprise at least one of a marking code, a location indicator, or an acoustic positioning beacon, and
wherein, optionally, the sensor comprises at least one of: an imaging sensor, a location communication sensor, or an acoustic sensor.

6. The method of claim 5, wherein the generating of the relative location information comprises:
determining whether the air mobility device is stationary within the designated zone; and
generating the relative location information based on the air mobility device being stationary within the designated zone.

7. The method of claim 5 or 6, wherein the generating of the relative location information comprises:
determining, based on charging support information of the charger and charging specification information of the air mobility device, whether the charger supports power transfer with the air mobility device; and
generating the relative location information based on the charger supporting the power transfer.

8. An apparatus comprising:
a sensor configured to sense a surrounding environment of at least one of an air mobility device or a charger;
memory configured to store at least one instruction; and
at least one processor configured to execute the at least one instruction stored in the memory to:
control the air mobility device and the charger to make a coupling, between a connector of the charger and a port of the air mobility device, for power transfer from the charger to the air mobility device;
determine, based on a coupling parameter of the coupling between the connector and the port not satisfying a threshold condition, whether the air mobility device is stationary within a designated zone; and
control, based on the air mobility device stopping outside the designated zone, the air mobility device and the charger to release the coupling between the port and the connector.

9. The apparatus of claim 8, wherein the coupling parameter comprises at least one of: an actuation force between the port and the connector, a coupling gap between the port and the connector, or an electrical transmission status, during the power transfer, of at least one of the port or the connector.

10. The apparatus of claim 8 or 9, wherein the at least one processor is further configured to execute the at least one instruction stored in the memory to control, based on the air mobility device moving and coming to a stop within the designated zone during the power transfer, the charger to approach the air mobility device to maintain the coupling such that the coupling parameter satisfies the threshold condition.

11. The apparatus of anyone of claims 8-10, wherein the processor is further configured to:
determine whether a caution situation occurs based on mobility status information of the air mobility device,
determine whether the caution situation satisfies a transfer interruption condition on the basis of the occurrence of the caution situation,
control the air mobility device and the charger to release the coupling on the basis of the caution situation satisfying the transfer interruption condition, and
maintain the coupling and notifying a message generated based on the maintained coupling and the caution situation on the basis of the caution situation dissatisfying the transfer interruption condition.

12. The apparatus of claim 11, wherein the mobility status information comprises:
operational status information related to an operation of at least one component of the air mobility device, wherein the operational status information is used for power transfer control, and
flight information related to the first flight operation of the air mobility device,
wherein the operational status information comprises a charging status and a component status,
wherein the charging status comprises at least one of: **a** remaining charge amount of the air mobility device, a temperature of a battery of the air mobility device, or an electrical state of the battery,
wherein the component status comprises status data of the at least one component of the air mobility device,
wherein the status data is obtained via the sensor, and
wherein the flight information comprises at least one of: schedule information, passenger information, or cargo information.

13. The apparatus of anyone of claims 8-12, wherein the at least one processor is configured to execute the at least one instruction stored in the memory to control the air mobility device and the charger to make the coupling by:
generating, based on position information and bearing information of each of the port and the connector, relative location information indicating relative locations of the port and the connector; and
controlling the air mobility device and the charger to make the coupling by controlling, based on the relative location information, the charger,
wherein, optionally, the at least one processor is further configured to execute the at least one instruction stored in the memory to:
determine the position information and the bearing information of the port by recognizing, via the sensor, a port indicator provided on the air mobility device; and
determine the position information and the bearing information of the connector by recognizing, via the sensor, a connector indicator provided on the charger,
wherein, optionally, the port indicator and the connector indicator comprise at least one of a marking code, a location indicator, or an acoustic positioning beacon, and
wherein, optionally, the sensor comprises at least one of: an imaging sensor, a location communication sensor, or an acoustic sensor.

14. The apparatus of claim 13, wherein the at least one processor is configured to execute the at least one instruction stored in the memory to generate the relative location information by:
determining whether the air mobility device is stationary within the designated zone; and
generating the relative location information based on the air mobility device being stationary within the designated zone.

15. The apparatus of claim 13 or 14, wherein the at least one processor is configured to execute the at least one instruction stored in the memory to generate the relative location information by:
determining, based on charging support information of the charger and charging specification information of the air mobility device, whether the charger supports power transfer with the air mobility device; and
generating the relative location information based on the charger supporting the power transfer.
